# EUROPÄISCHE PATENTSCHRIFT

(11) **EP 2 915 424 B1**
(45) Veröffentlichungstag und Bekanntmachung des Hinweises auf die Patenterteilung: **12.12.2018**
(21) Anmeldenummer: 15158001.6
(22) Anmeldetag: 06.03.2015
(51) Int. Cl.: A01K 51/00

(54) **VORRICHTUNG ZUR HYPERTHERMISCHEN BEHANDLUNG VON BIENEN**
DEVICE FOR HYPERTHERMAL TREATMENT OF BEES
DISPOSITIF DE TRAITEMENT HYPER-THERMIQUE DES ABEILLES

(30) Priorität: 06.03.2014 DE 102014102994
(43) Veröffentlichungstag der Anmeldung: 09.09.2015
(73) Patentinhaber: Reus, Wilhelm, 65812 Bad Soden (DE)
(72) Erfinder: Reus, Wilhelm, 65812 Bad Soden (DE)
(74) Vertreter: Haar, Lucas Heinz Jörn

(56) Entgegenhaltungen:
- DE-B1- 2 626 260
- FR-A- 1 274 700
- US-B1- 6 475 061
- US-B2- 7 666 057
- US-B2- 8 272 921

## Beschreibung

Die Erfindung betrifft eine Brutwabenheizvorrichtung zur thermischen Behandlung von Brutwaben mit einem Gehäuse mit Aufnahmen für mindestens ein flächig ausgebildetes Heizelement und für mindestens eine Brutwabe und mit einer mit dem Heizelement verbundenen Steuereinheit.

Bienen haben wegen der Erzeugung von Honig und der damit verbundenen Befruchtung von verschiedenen Pflanzen eine erhebliche Bedeutung für die Landwirtschaft. Bienen sind für die Landwirtschaft die drittwichtigste Tierart.

Es ist bekannt, dass Bienenvölker von Bienenmilben befallen sein können und hierdurch die Population des Bienenvolkes stark dezimiert wird. Solche bienenschädlichen Milben, wie beispielsweise der Gattung Varroa oder Tropilaelaps, befallen die Bienen und führen unweigerlich zu einem Zusammenbruch der Bienenpopulation. In der Regel werden von den Imkern chemische Behandlungsmethoden verwendet, um den Milbenbefall der Bienen in Grenzen zu halten. Eine völlige Säuberung des Bienenstocks von den Milben ist nur erschwert und mit großem Aufwand möglich. Außerdem werden durch die Flugbienen Milben eingetragen, dies wird als Reinvasion bezeichnet. Ein Bienenvolk komplett von Milben zu befreien und milbenfrei zu erhalten ist praktisch unmöglich. Die Milben vermehren sich in den gedeckelten (Bienen-) Brutzellen und nutzen adulte Bienen als Transportmittel zu weiteren Brutzellen oder Bienenvölkern. Die Milben ernähren sich von Körpersäften sowohl der adulten Bienen (außerhalb der Brutzellen) als auch der Bienenbrut (innerhalb der Brutzellen). Dazu bohren sie die Bienen / Bienenlarven an. Durch das Anbohren werden Krankheiten, aber auch Viren oder Bakterien auf die Biene übertragen. Dies führt nicht nur zur Schwächung des Bienenvolkes, sondern letztlich zum Absterben des Volkes.

Der Milbenbefall kann mithilfe chemischer Methoden bekämpft werden. Beispielsweise kann die Bienenpopulation mit Akariziden, vor allem Phosphorsäureester und Pyrethroiden behandelt werden. Jedoch konnten bei den Milben, insbesondere der Varroa destructor, bereits Resistenzen festgestellt werden. Weitere Nachteile der Akarizidbehandlung sind Rückstande in Wachs und Honig und Bienenschädigungen durch Exposition gemeinsam mit anderen in der Umwelt verbreiteten Chemikalien. Teilweise gute Erfolge wurden für den Einsatz von organischen Sauren wie Ameisensaure, Milchsaure und Oxalsäure berichtet. Diese Behandlungen sind nur nach der letzten Honigentnahme durchführbar, um die Honigqualität zu erhalten. Weiterhin soll die Behandlung bis Ende des Kalenderjahres erfolgt sein, sonst darf der im Folgejahr eingetragene Honig nicht in Verkehr gebracht werden.

Weiterhin sind im Stand der Technik verschiedene Vorrichtungen zur Behandlung von mit Milben befallenen Bienen beschrieben, bei denen die Bienen bzw. die Bienenvölker mit kontrolliert erwärmter Luft definierter Luftfeuchtigkeit behandelt werden, sodass durch die erhöhte Temperatur ein Absterben der Milben erreicht wird. Auch ist eine Behandlung der Drohnenbrut bekannt, da sich ein Teil der Milben in der Drohnenbrut ansiedelt. Die bekannten Vorrichtungen umfassen ein Heizelement, welches in den Bienenstock oder in einem separaten Gefäß integriert wird. US 8,272,921 B2 beschreibt eine Heizplatte, die als eine Mittelwand eines Rähmchen ausgebildet ist und auf der beidseitig die Brutwaben aufgebaut werden. Die Heizplatte besteht aus einer entsprechenden Anordnung von Heizdrähten und wird als Bienenwabe in einen Bienenstock eingebracht. Eine ähnliche Vorrichtung wird von der US 6,475,061 B1 offenbart.

Weiterhin offenbart die DE 26 26 260 eine Vorrichtung zum Beheizen eines Bienenstocks, mit dem insbesondere im Frühjahr eine konstante Temperatur eingestellt werden soll, so dass einem Absterben der Bienen durch einen Temperaturabfall entgegengewirkt wird. Die Vorrichtung umfasst ein elektrisches Flächenheizelement, welches als Heizplatte ausgestaltet ist und nachträglich in einen Bienenstock eingebracht werden kann. Das Flächenheizelement ist teilweise oder vollständig im Wabenraum eines Wabenrahmens angeordnet.

Eine vergleichbare Vorrichtung ist aus der US 7,666,057 B2 bekannt, mit dem in dem Bienenstock vorhandene kühlere Luft angesaugt und mittels einem in einem Gehäuse angeordneten Heizelement erwärmt wird. Die erwärmte Luft wird anschließend durch Konvektion in dem Bienenstock verteilt.

Nachteilig bei den im Stand der Technik bekannten Verfahren bzw. Vorrichtungen zur Wärmebehandlung ist, dass die Erwärmung und Verteilung von warmer Luft in einem Bienenstock nicht gleichmäßig erfolgt und somit nur eine ungleichmäßige Behandlung der Bienen möglich ist. Außerdem befindet sich auf den Brutwaben üblicherweise neben der gedeckelten Brut noch offene Brut, die jedoch mit derselben Lufttemperatur beaufschlagt werden. Deshalb kann eine Erhöhung der Temperatur dazu fuhren, dass zwar die in der gedeckelten Brut befindlichen Milben geschädigt oder getötet werden aber auch die Bienenbrut. Zudem wird die offene Brut geschädigt, dass sie anschließend von den adulten Bienen aus den Brutzellen entfernt wird. Nachteilig ist weiterhin, dass die Behandlung mit Wärme durch bekannte Behandlungsgeräte für den Imker sehr zeitaufwendig ist.

Der Erfindung liegt die Aufgabe zugrunde, eine Vorrichtung bereitzustellen, die nicht die Nachteile oder Mängel des Standes der Technik aufweist.

Die Aufgabe wird nach der Erfindung durch eine Vorrichtung mit den in Anspruch 1 angegebenen Merkmalen gelöst. Vorteilhafte Ausgestaltungen der Vorrichtung sind in den Unteransprüchen angegeben.

Bei der Vorrichtung nach der Erfindung ist vorgesehen, dass das Gehäuse als Teil einer Bienenbeute ausgestaltet ist und zwei von einer Trennwand getrennte Bereiche aufweist, die durch eine in der Trennwand vorliegenden verschließ- und öffenbare Öffnung verbunden sind, das Heizelement als Infrarotheizung ausgestaltet ist und mindestens eine wärmeabgebende Seitenfläche aufweist und derart in einem zweiten Bereich des Gehäuse eingebracht vorliegt, dass die wärmeabgebende Seitenfläche parallel zu einer von einem ersten in den zweiten Bereich bewegten Brutwabe angeordnet ist, wobei die Steuereinheit das Heizelement derart steuert und/oder regelt, dass in dem Gehäuse eine vorgegebene Temperatur vorliegt. Auch das Heizelement selbst kann auf eine vorgegebene Temperatur eingestellt werden. Mithilfe der erfindungsgemäßen Heizvorrichtung kann die Behandlungszeit auf weniger als 1,5 Stunden, insbesondere weniger als 1 Stunde reduziert werden, was wiederum einen geringere Belastung der Bienen beziehungsweise Bienenbrut bedeutet. Um eine direkte Erwärmung der parallel zu dem Heizelement angeordneten Brutwabe zu erreichen, ist das Heizelement als eine elektrische Infrarotheizung ausgestaltet. Die Brutwabe, insbesondere die Brutzellen, werden dann von der Infrarotstrahlung des Heizelements erwärmt. Durch die Verwendung einer Infrarotheizung wird eine Aufheizung der Luft in dem Gehäuse minimiert. Dies ist insbesondere dann von Vorteil, wenn noch Bienen in dem Gehäuse zur Fütterung der Brutzellen vorhanden sind, da somit eine etwaige Kühlung der Bienen durch Flügelbewegung gegebenenfalls verhindert werden kann. Durch die erfindungsgemäße Heizvorrichtung ist somit eine spezifische Erwärmung der Brutwaben möglich, ohne hierdurch die Luft in dem Bienenstock unnötig zu erwärmen und hierdurch die Luftfeuchtigkeit zu verringern, was wiederum eine Schädigung der adulten Bienen und der Bienenbrut zur Folge hätte. Die Infrarotheizung kann beispielsweise aus Segmenten bestehen, die wiederum individuell ansteuerbar sind und eine lokale Bestrahlung der zu erwärmenden Bereiche ermöglichen.

Es kann auch bevorzugt sein, dass die Steuereinheit das Heizelement derart steuert und/oder regelt, dass in dem Gehäuse, in oder an der Brutzelle und/oder an dem Heizelement eine vorgegebene Temperatur vorliegt. Im Sinne der Erfindung umfasst die parallele Anordnung der wärmeabgebenden Seitenfläche des Heizelementes zu einer ersten Brutwabe, auch eine im Wesentlichen oder eine nahezu parallele Anordnung. Die Brutwabenheizvorrichtung kann somit zur thermischen Behandlung der in der Brutwabe vorliegenden Brut, aber auch zur thermischen Behandlung von Bienen eingesetzt werden, die auf den Mittelwänden, Waben oder Leerwaben sitzen. Eine Leerwabe ist insbesondere eine ausgebaute Wabe, die noch keine Bienenbrut, Pollen, Futter oder Honig enthält. Die Wabe oder die Leerwabe kann - ganz oder teilweise - aus Kunststoff, Bienenwachs, einer Kombination hieraus oder einem anderen Material, auch in Kombination mit Bienenwachs, bestehen.

Im Sinne der Erfindung kann das Gehäuse insbesondere als Zarge, Beutenzarge oder Bienenzarge bezeichnet werden. Diese Begriffe können im Sinne der Erfindung synonym verwendet werden. Eine Zarge ist ein kastenförmiges Gehäuse bevorzugt aus Holz oder Kunststoff und dient den Bienen als Teil- der Behausung. Es sind auch Beuten bekannt, die über keine Zargen verfügen, zum Beispiel die Hinterbehandlungsbeute (ein Kasten mit Flugloch nach vorne und auf der Rückseite eine Tür, durch die überwiegend imkerliche Tätigkeiten erfolgen).

Eine Brutwabe ist im Sinne der Erfindung insbesondere ein Rähmchen mit oder ohne Mittelwand mit einem von den Bienen errichteten Wabengebilde aus Wachs oder eine Kunstwabe, das die Brutzellen beziehungsweise Brut enthält. Die Brutzellen gehen im Wesentlichen senkrecht von der Mittelwand ab. Die Mittelwand liegt in einer mittleren Längsebene der Brutwabe. Im Sinne der Erfindung kann die Mittelwand auch als mittlere Längsebene bezeichnet werden. Die Aufnahmen für die Heizelemente und Brutwaben können schienenförmig ausgebildet und in dem Gehäuse oder der Zarge angeordnet sein, wobei die Brutwabe, Rähmchen oder Leerrähmchen in das Gehäuse eingebracht werden. Dem Fachmann ist bekannt, dass beispielsweise jeweils eine schienenförmige Aufnahme an den Seitenwänden des Gehäuses angebracht ist, in die die Heizelemente und Brutwaben eingebracht werden. Die Brutwaben und Heizelemente können in den Aufnahmen verschiebbar gelagert sein oder sie sind mittels an den Aufnahmen reversibel anbringbaren Halteelementen in ihrer Position fixiert.

Um den Bienen den Bau von Waben leichter zu machen und die Größe der Brutzellen vorzugeben, wird oftmals eine Mittelwand verwendet. Die Mittelwand ist eine mit dem Muster der Brutzellen versehene dünne Wachsschicht, die in das leere Rähmchen eingebracht wird. Die Bienen richten sich nach der Vorgabe der Mittelwand und bauen mit dem Wachs der Mittelwand und neu erzeugtem Wachs die Brutzellen, somit die Brutwabe. Von der ursprünglichen Mittelwand in ihrer Dicke und Prägung ist nach dem Bau der Brutzellen nur noch wenig feststellbar. Falls der Imker keine Mittelwand verwendet, erfolgt die Herstellung der Brutwabe im sogenannten Naturwabenbau. Hierbei wird sämtliches Wachs neu durch die Bienen erzeugt, was einen erheblichen Aufwand für die Bienen darstellt. Der Honigertrag sinkt dadurch.

Durch die erfindungsgemäße Anordnung des Heizelementes werden die Brutwaben, insbesondere die Brutzellen und die in den Zellen befindliche Bienenbrut gleichmäßig erwärmt, sodass ein Absterben der Milben erreicht wird. Die Bienenbrut erfährt durch die Wärmebehandlung keine Beschädigung, was einen erheblichen Vorteil gegenüber den im Stand der Technik bekannten Vorrichtungen darstellt. Erfahrungsgemäß ist die Brut stark von Milben befallen. Die Bienenbrut befindet sich in den Brutzellen, die beidseitig im Wesentlichen senkrecht oder leicht schrägabfallend zur Mittelwand, beziehungsweise zur mittleren Längsebene angeordnet sind. Dadurch, dass die wärmeabgebende Seitenfläche des Heizelements parallel zu einer ersten Brutwabe angeordnet ist, wird die Brutwabe gleichmäßig erwärmt. Es hat sich herausgestellt, dass durch diese Anordnung des Heizelementes und der Brutwabe eine optimale und vorallem gleichmäßige Erwärmung der Bienenbrutzellen erreicht werden kann, die die gedeckelte Bienenbrut nicht schädigt, jedoch zum Absterben der in den Brutzellen befindlichen Milben führt.

In einer weiteren Ausgestaltung der Erfindung ist vorgesehen, dass das Heizelement eine erste und eine zweite wärmeabgebende Seitenfläche aufweist, wobei die erste wärmeabgebende Seitenflache parallel zu der ersten Brutwabe und die zweite wärmeabgebende Seitenfläche im Wesentlichen parallel zu einer weiteren Brutwabe angeordnet ist. Somit wird die erste wärmeabgebende Seitenfläche des Heizelementes im Wesentlichen parallel zu einer ersten Brutwabe und die zweite wärmeabgebende Seitenfläche im Wesentlichen parallel zu einer weiteren Brutwabe angeordnet. Hierdurch können zwei Brutwaben mittels einem Heizelement thermisch behandelt werden. Das Heizelement kann parallel zu der mittleren Längsebene der Brutwabe und beabstandet zu in der Brutwabe vorliegenden Brutzellen angeordnet sein, so dass eine effiziente Erwärmung der Brutzellen erreicht wird. Der Abstand zwischen Brutzellen und Heizelement kann frei gewählt sein, wobei es vorteilhaft sein kann, den Abstand so zu wählen, dass eine Biene hindurchpasst. Bienen könnten so auch während der Erwärmung der Brutwabe die Pflege und Fütterung der offenen Bienenbrut fortsetzten.

Es kann für die Bekämpfung der in der Brutwabe vorliegenden Milben vorteilhaft sein, einerseits den Abstand zwischen Heizelement und Brutwabe so zu gestalten, dass keine Bienen zwischen Heizelement und Bienenwabenzellen passen und/oder andererseits sicherzustellen, dass die Brutwabenheizvorrichtung während der Wärmebehandlung bienenfrei ist, das heißt, dass keine adulten Bienen bei den zu behandelnden Brutwaben anwesend sind.

Die Steuereinheit steuert oder regelt das Heizelement derart, dass in dem Gehäuse eine vorgegebene Temperatur vorliegt, wobei eine Temperatur im Bereich von 35° bis 45° Celsius, insbesondere 40° bis 42° Celsius bevorzugt ist. Es hat sich als besonders vorteilhaft herausgestellt, wenn bereits bei dem Einbringen der Brutwaben in die Brutwabenheizvorrichtung eine Temperatur von 35° bis 38° Celsius in dem Gehäuse vorliegt. Versuche haben gezeigt, dass bei dieser Temperatur ein erhöhtes Milbensterben erreicht wird, ohne hierbei jedoch die Bienenbrut zu schädigen. Weiterhin kann es vorteilhaft sein, wenn vor dem Erwärmen der Brutzellen die Brutzellentemperatur für mindestens 20 Minuten auf einer Brutzellentemperatur von 32° bis 33° Celsius gehalten wird. Durch diese Vorbereitungsphase lasst sich die thermische Behandlung sehr kontrolliert durchführen. Die Temperatursteuerung oder -regelung kann manuell oder automatisch erfolgen.

Bei den Ausgestaltungen des Heizelementes kann es vorteilhaft sein, wenn mittels einem Temperaturmesselement in der Brutwabe, insbesondere in den Brutzellen die Temperatur bestimmt wird, so dass die Steuereinheit das Heizelement entsprechend steuern oder regeln kann. Dies kann auch eine Kaskadenregelung sein, mit den Regelgrößen Lufttemperatur, Heizelementtemperatur und Bruttemperatur.

Das Gehäuse weist bevorzugt einen Boden, eine Abdeckung und Seitenwände auf, wobei mindestens ein weiteres Heizelement im Boden, der Abdeckung oder Wänden des Gehäuses vorliegt. Auch die Integration eines Heizelementes in die Abdeckung ist möglich. Die Abdeckung kann beispielsweise als Deckel ausgestaltet sein, der reversibel mit den Seitenwänden verbindbar ist. Auch kann die Abdeckung an den Seitenwänden angelenkt sein, beispielsweise mittels einem Scharnier.

Es ist bevorzugt, dass mindestens ein Heizelement, vorzugsweise mehrere, das heißt mehr als ein Heizelement in dem Gehäuse vorliegt, wobei es vorteilhaft ist, dass mehrere Heizelemente und Brutwaben in die Aufnahmen im Gehäuse reversibel einbringbar sind. Die Brutwaben und Heizelemente können in schienenförmig ausgestalteten Aufnahmen eingehängt oder geschoben werden. Insofern können die Aufnahmen an den Seitenwänden oder dem Boden des Gehäuses angeordnet sein. Die schienenförmigen Aufnahmen können aus Metall, Kunststoff oder Holz gefertigt sein. Die genannten Ausführungsvarianten sind beispielhaft nur für ein Heizelement formuliert, wobei die Ausführungsvarianten aber ebenso auf mehrere im Gehäuse vorliegende Heizelemente anwendbar sind.

Neben der als Heizelement verwendeten Infrarotheizung ist erfindungsgemäß vorgesehen, dass weitere Heizelemente als elektrische Heizfolie, elektrische Heizplatte, Wärmetauscher oder Wärmerohr ausgestaltet sind, wobei ein Wärmerohr im Sinne der Erfindung auch als Heatpipe oder Zweiphasen-Thermosiphon bezeichnet werden kann. Bevorzugt ist zudem eine elektrische Folienheizungen, Luft/Luft- Wärmetauscher oder Wasser/Luft-Wärmetauscher. Entsprechend geeignete Heizfolien oder Heizplatten können elektrisch oder induktiv erwärmt werden. Durch die Ausgestaltungen des Heizelementes sind eine schnelle Ansprechzeit und eine gleichmäßige Wärmeverteilung sichergestellt, wobei neben den durch die Infrarotheizung erwärmten Brutwabe durch die weiteren Ausgestaltungen der Heizelemente auch weitere Bereiche in dem Bienenstock erwärmt werden können oder sogar diese sogar zur Lufttemperierung genutzt werden. Das Heizelement ist ein flächig ausgebildetes Heizelement oder ein Flächenheizelement. Das Heizelement kann erfindungsgemäß mit einer Kunststoff-, Keramik- oder Metallschicht ummantelt sein, wobei das Heizelement auch in eine Metall-, Keramik- oder Kunststoffschicht eingegossen oder eingepresst sein kann. Als Materialien bieten sich insbesondere lebensmittelechte, beziehungsweise biokompatible Materialien an. Bevorzugt ist eine Kunststoff-, Keramik- oder Metallschicht als wärmeleitendes Material, welches eine gleichmäßige und flächige Wärmeverteilung fördert, so dass auch eine gleichmäßige Erwärmung der Brutzellen erreicht wird.

Die Heizelemente sind über ein Kabel oder kabellos mit der Steuereinheit verbunden und werden von dieser gesteuert oder geregelt. Vorteilhafterweise können die Heizelemente parallel oder in Reihe oder Gruppe, oder einzeln gesteuert sein. Das heißt, die Heizelemente können jeweils einen Regler besitzen, über den die jeweilige Temperatur des Heizelementes steuerbar ist. Außerdem können die Heizelemente auch zu Gruppen zusammengeschaltet sein, so dass eine Gruppe auf eine vorgegebene Temperatur erwärmt wird. Hierdurch kann in Abhängigkeit der Befüllung des Gehäuses mit Brutwaben oder/und Art der Brut (Arbeiterinnen- oder Drohnenbrut) eine unterschiedliche Temperaturregelung erfolgen. Elektrische Heizelemente sind vorzugsweise über ein Stromkabel- mit einer Stromquelle verbunden. Diesbezüglich kann es bevorzugt sein, wenn die schienenförmigen Aufnahmen zur Aufnahme der Heizelemente aus Metall gefertigt und mit einer Stromquelle elektrisch leitend verbunden sind. Die Heizelemente können dann in die Aufnahmen eingebracht werden und den Strom abgreifen.

In einer erfindungsgemäßen Ausführungsform sind in der Brutwabenheizvorrichtung mit der Steuereinheit verbundene Temperaturmesselemente angeordnet. Die Temperaturmesselemente können beispielsweise Widerstandsthermometer oder sonstige Temperaturmesssonden zur Bestimmung der Temperatur in einem Fluid, insbesondere Luft oder in der Bienenbrut, beispielsweise der Brutzellen sein. Es ist mindestens ein Temperaturmesselement in dem Gehäuse angeordnet und mit der Steuereinheit über ein Kabel oder kabellos verbunden. Die Messung der Temperatur erfolgt zweckmäßigerweise in oder zumindest an einer Brutzelle. Somit kann die gemessene Ist-Temperatur mit einer vorgegebenen Soll-Temperatur abgeglichen und in Abhängigkeit der errechneten Differenz das Heizelement angesteuert oder geregelt werden. Diesbezüglich ist es vorteilhaft, wenn die Steuereinheit eine entsprechende Prozessoreinheit umfasst oder mit einer solchen verbunden ist. Es ist bevorzugt, dass Temperaturmesselemente die Temperatur im Gehäuse, an oder in den Brutzellen und/oder an den Heizelementen erfassen, wobei die dort gemessenen Temperaturen ebenfalls geregelt werden können.

Vorteilhafterweise ist das Temperaturmesselement derart ausgestaltet, die Temperatur mit einer Messgenauigkeit von +/- 0,1° Celsius zu messen. Es können auch Einbauthermostate mit Kapillarfühler zum Einsatz kommen, die komplett auf der Brutwabe entfernbar angeordnet sind und Energie über ein Kabel oder über die Aufnahmen beziehen und die Temperatur regeln. Ferner können dem Fachmann bekannte Berührungsthermometer oder berührungslos messende Thermometer zur Temperaturmessung verwendet werden. Weiterhin können die Temperaturmesselemente mit einer zur Spitze ausgebildeten Einstech- oder Einsteckhülse ausgestaltet sein, um sie in die Brut der Brutwabe einzustechen. Das Temperaturmesselement ist zweckmäßigerweise stabförmig gestaltet, wobei die Spitze in eine oder mehrere Brutzellen hineinragt. Die Spitze ist dabei so dimensioniert, dass diese die Temperatur in der Brutzelle genau erfasst. Es ist bevorzugt, dass nur die vollverdeckelten Brutwaben behandelt werden, wobei die auf den Brutwaben ansitzenden adulten Bienen vor dem Erwärmen der Brutwaben von diesen entfernt werden können. Hierfür werden die Brutwaben aus einem Bienenstock entnommen und die darauf befindlichen Bienen von der Brutwabe entfernt. Die bienenfreien Brutwaben können dann in das Gehäuse der Brutwabenheizvorrichtung eingehängt werden. Nach der Wärmebehandlung werden die Brutwaben wieder in den Bienenstock zurückplatziert.

Die Brutwabenheizvorrichtung kann in einer Ausgestaltung einen Luftbefeuchter umfassen. Der Luftbefeuchter kann eine Aerosol bildende Vorrichtung, beispielsweise ein Ultraschallzerstäuber oder ein Wasservernebelungselement, sein, der in der Brutwabenheizvorrichtung eine relative Luftfeuchte von mindestens 70%, vorzugsweise über 80% bereitstellt. Die relative Luftfeuchte von mindestens 70% ist insbesondere in der die Brutwaben oder Brutzellen (gedeckelte und ungedeckelte) umgebenden Luft vorteilhaft. Grundsätzlich ist es empfehlenswert, wenn die relative Luftfeuchtigkeit während der thermischen Behandlung der Brutwaben mindestens 70% beträgt. Ein gegebenenfalls erforderliches Nachfüllgefäß des Luftbefeuchters kann außerhalb des Gehäuses angeordnet sein, um den Füllstand des Nachfüllgefäßes besser und einfacher kontrollieren zu können. Das Nachfüllgefäß kann auch innerhalb des Gehäuses oberhalb oder unterhalb oder im Bereich der Brutwaben angeordnet sein. Der Füllstand kann beispielsweise mit einer Füllstandsbestimmungsvorrichtung, in Form eines Schwimmers kontrolliert werden. Der Luftbefeuchter kann zudem für eine Verteilung von Milbenbekämpfungsmitteln verwendet werden. In der Regel wird die gewünschte Luftfeuchte dadurch erreicht, dass Wasser von dem Luftbefeuchter als Aerosol in das Gehäuse eingebracht wird. Es hat sich jedoch als vorteilhaft erwiesen, wenn der Luftbefeuchter, beziehungsweise das Nachfüllgefäß einen Anteil eines Milbenbekämpfungsmittel umfasst. Als Milbenbekämpfungsmittel kann beispielsweise eine organische Säure wie Milchsäure eingesetzt werden, die in einer Konzentration von 10% bis 25%, insbesondere 15% vorliegt und ebenfalls als Aerosol in dem Gehäuse verteilt wird. Die organische Säure liegt nur in einer geringen Konzentration vor und dient lediglich als unterstützendes Mittel für die thermische Behandlung.

Der Luftbefeuchter kann über eine Überwachungs- und Signalisierungsvorrichtung mit einer Stromversorgung verbunden sein. Die Überwachungs- und Signalisierungsvorrichtung kann wiederum mit der Steuereinheit des Heizelements verschaltet sein. Hierdurch wird gewährleistet, dass das Heizelement ausgeschaltet wird, wenn keine Flüssigkeit mehr im Nachfüllgefäß des Luftbefeuchters ist oder der Luftbefeuchter nicht voll funktionsfähig ist. Zusätzlich kann ein Alarm ausgelöst werden. Bienen und Bienenbrut sind temperatursensitiv und benötigen gerade bei zusätzlicher Erwärmung eine gewisse Luftfeuchtigkeit um nicht auszutrocknen. Durch das Abschalten des Heizelementes wird eine übermäßige Erhitzung beziehungsweise Austrocknung des Gehäuses und somit der Bienen und/oder der Bienenbrut verhindert, falls der Luftbefeuchter ausfällt.

Diesbezüglich kann es vorteilhaft sein, wenn mindestens ein Luftfeuchtigkeitssensor zur Messung der relativen Luftfeuchtigkeit in dem Gehäuse angeordnet ist, der die Luftfeuchtigkeit der im Gehäuse vorliegenden Luft bestimmt. Sobald die Luftfeuchtigkeit einen vorgegebenen Wert unterschreitet, kann ebenfalls über die Überwachungs- und Signalisierungsvorrichtung, die mit den Luftfeuchtigkeitssensor oder einer entsprechenden Feuchtigkeitsregeleinrichtung und dem Luftbefeuchter verbunden sind, das Heizelement ausgeschaltet werden oder der Luftbefeuchter entsprechend geregelt oder gesteuert werden, um eine Überhitzung oder Austrocknung des Gehäuses zu verhindern. Weiterhin kann der Luftbefeuchter über eine Feuchtigkeitsregeleinrichtung gesteuert oder geregelt werden. Mittels der Feuchtigkeitsregeleinrichtung kann eine vorgegebene relative Luftfeuchtigkeit im Gehäuse eingestellt werden. Bei Bedarf, das heißt, sobald die relative Luftfeuchtigkeit im Gehäuse zu hoch oder zu niedrig ist, kann über die Feuchtigkeitsregeleinrichtung die Luftfeuchtigkeit im Gehäuse manuell- oder automatisch korrigiert werden. Vorteilhafterweise sind auch die Luftfeuchtigkeitssensoren mit der Feuchtigkeitsregeleinrichtung und dem Luftbefeuchter mit einem Kabel oder kabellos verbunden.

Erfindungsgemäß ist ferner vorgesehen, dass an dem Gehäuse eine Solarthermievorrichtung und/oder eine Photovoltaikanlage angeordnet ist. Dem Fachmann ist bekannt, dass Solarthermie die Umwandlung der Sonnenenergie in nutzbare thermische Energie bezeichnet. Es hat sich herausgestellt, dass eine entsprechende Solarthermievorrichtung an dem Gehäuse der Brutwabenheizvorrichtung angeordnet werden kann. Hierbei können Sonnenkollektoren, wie beispielsweise Vakuumröhrenkollektoren oder Flachkollektoren verwendet werden. Es ist üblich, Bienenzargen oder Bienenbeuten mit einer im Wesentlichen flachen Abdeckung zu versehen, auf die beispielsweise die Solarthermievorrichtung angebracht werden kann. Die Solarthermievorrichtung kann jedoch auch beabstandet zu dem Gehäuse, das heißt der Zarge, angeordnet werden. In der Solarthermievorrichtung wird bekannterweise die Energie der Sonneneinstrahlung auf ein in der Solarthermievorrichtung vorliegendes Wärmeträgermedium übertragen. Die Solarthermievorrichtung kann mit dem Heizelement oder einem Wärmetauscher verbunden sein, so dass eine von der Solarthermievorrichtung umgewandelte thermische Energie zur Beheizung des Heizelementes dienen kann. Das Wärmeträgermedium der Solarthermievorrichtung kann mit dem Heizelement verschaltet sein, wobei die thermische Energie direkt oder beispielsweise über einen Wärmetauscher auf das Heizelement übertragen wird.

Ferner kann es vorteilhaft sein, dass zusätzlich zu der oder anstelle der Solarthermievorrichtung eine Photovoltaikanlage an dem Gehäuse angeordnet ist. Es ist bekannt, dass Photovoltaik die direkte Umwandlung von Lichtenergie aus Sonnenficht in elektrische Energie mittels Solarzellen bezeichnet. Zur Energiewandlung wird der photoelektrische Effekt von Solarzellen ausgenutzt, die zu so genannten Solarmodulen verbunden werden. Die erzeugte Elektrizität kann direkt genutzt oder in Akkumulatoren gespeichert werden. Die erzeugte Gleichspannung kann von einem Wechselrichter umgewandelt werden. Die Photovoltaikanlage umfasst insbesondere Solarzellen, Regler, einen Wechselrichter und Stromleitungen. Die Photovoltaikanlage, beispielsweise die Solarzellen können an dem Gehäuse angebracht sein, wobei es sich auch anbieten kann, die Photovoltaikanlage separat zu dem Bienenstock anzuordnen. Diesbezüglich kann eine Stromquelle elektrische Geräte der Brutwabenheizvorrichtung, wie beispielsweise elektrische Heizelemente und Steuereinheit mit Strom versorgen. Auch kann eine Windkraftanlage zur Bereitstellung des Stroms genutzt werden, die mit den elektrischen Bauteilen, wie dem Heizelement, entsprechend elektrisch verbunden ist.

Es hat sich herausgestellt, dass die thermische Behandlung nach Erreichen der Soll-Temperatur von insbesondere 40° bis 42° Celsius weniger als eine Stunde beträgt. Als gesamte Behandlungszeit sind circa 2,5 bis 3 Stunden vorgesehen, wobei hierin das Einbringen der Brutwaben in die Brutwabenheizvorrichtung, das Aufheizen, die Behandlung und gegebenenfalls eine Abkühlphase enthalten sind. Die Behandlung kann wöchentlich oder mehrfach im Jahr erfolgen. Es ist bevorzugt, jede Brutzelle mit gedeckelter Bienenbrut einmal- zu behandeln. Die behandelten Brutwaben können eine Kennzeichnung erhalten (Bienen-Stand-Bezeichnung, Volksbezeichnung, Daten der Behandlung Anzahl, Kalenderdatum, etc.). Vorteilhaft ist, wenn die Brutwabe von der Königin in einem Zuge und komplett bestiftet wird mit Eiern, so dass bei der Brutbehandlung alle Brutzellen gedeckelt sind, das heißt, es keine offene Brut gibt, die später gedeckelt würde und möglicherweise nicht behandelt wird. Ein weiterer Vorteil der erfindungsgemäßen Ausgestaltung ist, dass die Heizelement im Wesentlichen ständig im Brutnest zwischen den Brutwaben verbleiben können, so dass das Entfernen der Bienen entfällt. Somit können alle oder nur einige Heizelemente mit Energie versorgt und die Behandlung in kürzerer Zeit durchgeführt werden.

Die Brutwabenheizvorrichtung kann in einer Ausgestaltung der Erfindung ein Bestandteil eines Bienenstocks sein und in diesem als Teil der Bienenbeute fungieren, wobei die Beute mindestens einen oder zwei durch eine Trennwand getrennte Räume oder Bereiche aufweist und mindestens in einem Bereich mindestens ein Heizelement vorliegt. Die Trennwand kann als bienendichte Trennwand ausgestaltet sein und eine Öffnung aufweisen, die mit einem Verschlussmittel automatisch oder manuell verschließbar und öffenbar ist.

Erfindungsgemäß ist vorgesehen, dass in dem Boden, der Abdeckung oder einer Seitenwand des Gehäuses eine verschließbare Öffnung vorliegt, durch die Bienen hindurchtreten können. Hierdurch kann mitunter sichergestellt werden, dass die Bienen bei Bedarf in das Gehäuse, insbesondere die Bienenbeute beziehungsweise den Behandlungsraum eindringen können, um eine Fütterung und Pflege der Bienenbrut vorzunehmen. Das Eindringen der Bienen kann durch Öffnen der Öffnung ermöglicht werden.

Es kann bevorzugt sein, dass das Heizelement in die Brutwabe als Mittelwand zur Trennung der beidseitig angeordneten Zellen integriert ist. Das in die Wabe aufgenommene und als Infrarotheizung ausgestaltete Heizelement erzeugt eine direkte Erwärmung der Brutwabenzellen und der in den Zellen vorliegenden Brut.

Um die Mobilität und die Einsetzbarkeit der Brutwabenheizvorrichtung zu erhöhen, können Wärmeakkus und/oder Latentwärmespeicher (zum Beispiel Paraffine) eigesetzt werden, die eine Temperatur um 42° Celsius aufweisen und eine Wärmemenge bei geeigneter Temperatur abgeben können, um die thermische Behandlung der Brutwaben oder Bienen durchführen zu können. Die Wärmeakkus oder Latentwärmespeicher können außerhalb des Gehäuses beispielsweise im erwärmten Wasser mit Wärme aufgeladen werden. Die Wärmeenergie der Wärmeakkus und/oder Latentwärmespeicher kann während und außerhalb (vor und/oder nach) der thermischen Behandlung zum Temperieren des Gehäuses, insbesondere des Brutnestes auf circa 35° bis 40° Celsius verwendet werden. Die Wärmeakkus und/oder Latentwärmespeicher können ebenfalls als Heizelemente in das Gehäuse integriert werden, so dass mit den Wärmeakkus und/oder Latentwärmespeicher im Gehäuse eine vorgegebene Temperatur von insbesondere 40° bis 42° Celsius erreicht wird. Ferner können die Wärmeakkus und/oder Latentwärmespeicher als thermische Speicher verwendet werden, so dass sie beispielsweise bei einer thermischen Behandlung mit einem Heizelement indirekt erwärmt werden und diese thermische Energie bei Bedarf, beispielsweise zur Temperierung des Brutnestes abgeben.

Es ist bekannt, dass Bienen erwärmte Luft durch Flügelbewegungen kühlen, so dass es für eine erfolgreiche thermische Behandlung empfehlenswert ist, den Behandlungsraum bienenfrei zu halten. In einer Ausgestaltung der Erfindung ist vorgesehen, dass um die gedeckelten Bereiche der Brutwabe herum ein umlaufendes Abstandsmittel zwischen einer wärmeabgebenden Seitenfläche eines Heizelementes und der Brutwabe angeordnet ist. Hierdurch erfolgt eine Trennung zwischen den gedeckelten Brutzellen und den ungedeckelten Zellen (inklusive offener Brutzellen). Durch den Einbau des Abstandsmittels zwischen Heizelement und Brutwabe ist es den Bienen nicht mehr möglich, eine Luftventilation im gedeckelten Bereich durchzuführen. Im ungedeckelten Bereich können die Bienen die Luft mit Flügelbewegung kühlen und die offene Brut pflegen und versorgen. Das beschriebene Abstandsmittel kann einen oder mehrere schmale Durchlässe für Bienen aufweisen, damit schlüpfende Brut aus dem abgeschlossenen Bereich raus kann. Dabei können adulte Bienen auch in den gedeckelten Brutbereich eindringen und der schlüpfenden Brut beim Schlüpfen helfen, wobei das Kühlen durch Flügelbewegungen keinen durchschlagenden Erfolg hat, da durch die kleinen Öffnungen des Abstandsmittels keine effiziente Kühlung erreicht werden kann.

Das Abstandsmittel kann in Form eines Schlauches, eines Schaumstoffzylinders, Schaumstoffschlauches, fadenförmigen Gebildes oder einer Bürstenrolle ausgeführt sein. Dabei kann die Dicke des Abstandsmittels so gewählt werden, dass Bienen zwischen Heizelement und Brutwabe Platz haben. Bevorzugt ist ein Abstand von 2 mm bis 10 mm, insbesondere 6 mm bis 8 mm. Das Abstandsmittel kann beispielsweise reversibel mit der Brutwabe verklebt werden oder mittels einer Stützkonstruktion an dieser angeordnet werden. Die Stützkonstruktion kann beispielsweise aus einem Kreuz (senkrecht und waagerecht = Seitenhalbierende der Brutwabe) oder zusätzlich zu dem Kreuz die Diagonalen der Brutwabe aufweisen und besteht vorteilhafterweise aus einer Spirale mit dem Durchmesser des oben genannten Abstands zwischen Heizelement und Brutwabe. Diese Spirale kann zum einen als Abstandshalter zwischen Brutwabe und Heizung genutzt werden und zum anderen dient sie der Stabilisierung an den Kreuzungspunkten. Das Abstandsmittel ist vorzugsweis aus einem biokompatiblen oder lebensmittelechten Material gefertigt, insbesondere Kunststoff, Metall oder einer Kombination hieraus.

Des Weiteren kann es vorteilhaft sein, wenn eine isolierende Abdeckung aus Metall, Kunststoff oder Naturfasern in Form eines Vorhanges oder eines Rollos zum Abschirmen der erhöhten Wärme zu der noch offenen (ungedeckelten) Brut hin, vor der Brutwabe angeordnet ist. Die Abdeckung kann reversibel anbringbar sein und kann mit jeweils halbmondförmigem Ausschnitt, auf die Größe des zu schützenden oder zu erwärmenden Bereichs eingestellt werden, so dass nur die gedeckelten Brutzellen direkt - ohne isolierende Abdeckung - von dem Heizelement erwärmt werden.

Die Erfindung betrifft ferner ein Verfahren zur thermischen Behandlung von Brutwaben, wobei in einem Vorbereitungsschritt ein erstes flächig ausgebildetes Heizelement mit einer ersten und einer zweiten wärmeabgebenden Seitenfläche in eine Aufnahme eingebracht wird, die in einem zweiten Bereich in einem als Teil einer Bienenbeute ausgestalteten Gehäuse vorliegt, wobei in einem Einbringungsschritt eine erste Brutwabe zur thermischen Behandlung aus einem in dem Gehäuse vorliegenden ersten Bereich in den zweiten Bereich bewegt und parallel zu der ersten wärmeabgebenden Seitenflache des Heizelementes angeordnet wird und anschließend eine zweite Brutwabe parallel zu der zweiten wärmeabgebenden Seitenflache des Heizelementes in die Aufnahme eingeführt wird, wobei zwischen den Bereichen eine bienendichte Trennwand mit einer verschließ- und öffenbaren Öffnung vorliegt, die geschlossen wird, wobei in einem nachfolgenden Heizschritt das Heizelement derart von einer mit dem Heizelement verbundenen Steuereinheit gesteuert und/oder geregelt wird, dass in dem Gehäuse eine vorgegebene Temperatur erreicht wird. Die vorgegebene Temperatur kann insbesondere im Bereich von 35° bis 45° Celsius, insbesondere 40° bis 42° Celsius liegen, wobei diese Temperatur im Gehäuse, insbesondere in oder an den Brutwaben, dem Heizelement und/oder Bestandteilen des Gehäuses bestimmt wird. Es ist vorgesehen, dass das Gehäuse als Teil einer Bienenbeute ausgestaltet ist, die mindestens einen oder zwei durch eine Trennwand getrennte Bereiche aufweist und das Heizelement mindestens in einem Bereich vorliegt und die Trennwand als bienendichte Trennwand mit einer verschließbaren und öffenbaren Öffnung ausgestaltet ist, durch die Bienen hindurchtreten können.

Durch das erfindungsgemäße Verfahren einer thermischen Behandlung von Brutwaben wird erreicht, dass der Milbenbefall reduziert wird. Das Verfahren kann flexibel und einfach in einem Gehäuse, beispielsweise in einem Bienenstock oder einem separaten Gehäuse im Wesentlichen ohne adulte Bienen durchgeführt werden. Das Gehäuse, in dem die thermische Behandlung durchgeführt wird, kann Bestandteil der Bienenbeute sein, die mindestens einen oder zwei durch eine bienendichte Trennwand getrennte Bereiche aufweist, wobei das Heizelement mindestens in einem Bereich vorliegt. In der Trennwand ist eine verschließbare Öffnung vorgesehen. Somit kann die Behandlung in dem abgetrennten Bereich erfolgen, indem die Brutwaben, das heißt die Rähmchen in den Bereich eingebracht werden, in dem die thermische Behandlung durchgeführt wird. Adulte Bienen können durch die Öffnung in der Trennwand hindurchfliegen, um beispielsweise die Brut zu füttern und zu pflegen. Bei Bedarf kann die Öffnung geschlossen werden. Ferner kann vorgesehen sein, dass das Gehäuse als Behandlungsraum im oder neben dem Bienenvolk, insbesondere innerhalb oder neben der Bienenzarge angeordnet ist, so dass keine bienendichte Trennung notwendig ist.

Die Erfindung wird nachfolgend anhand eines Ausführungsbeispiels näher erläutert, das in der Zeichnung dargestellt ist. Es zeigen:
- Figur 1: eine Brutwabenheizvorrichtung mit Heizelementen,
- Figur 2: eine Brutwabenheizvorrichtung mit mehreren Heizelementen und Brutwaben,
- Figur 3: Bienenbeute mit in einem Bereich vorliegenden Heizelementen,
- Figur 4: Brutwabe mit integrierten Heizelement,
- Figur 5: Brutwabenheizvorrichtung mit Abstandsmittel und
- Figur 6-Figur 8: Abdeckung der nicht gedeckelten Brutzellen mit einem Abdeckmittel.

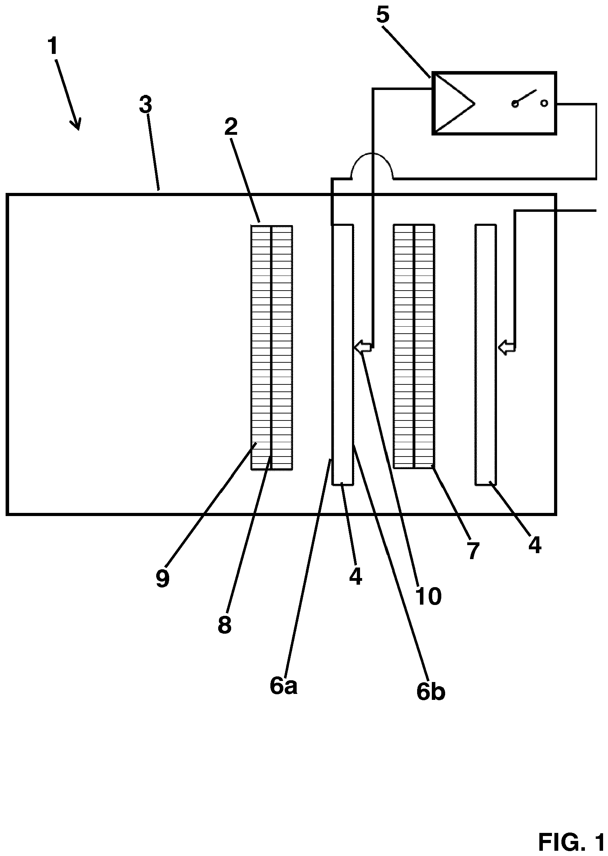

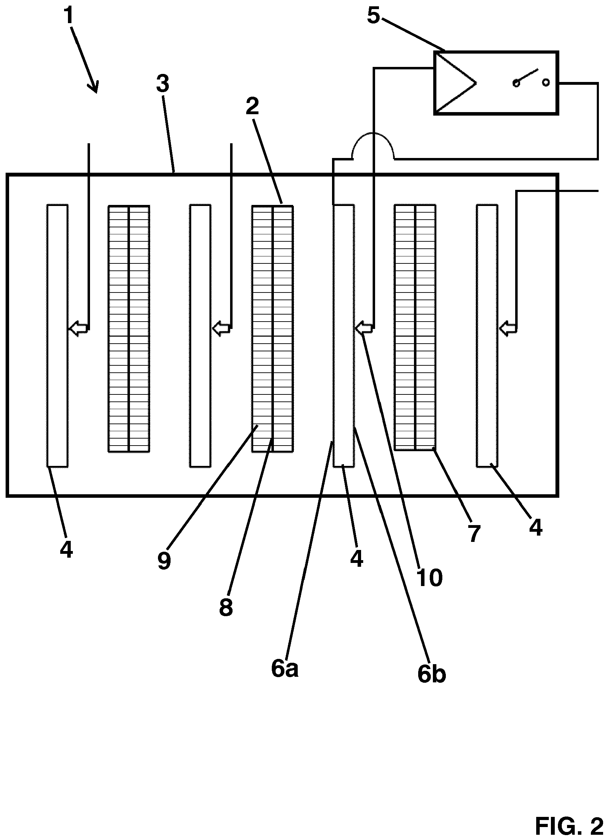

Figur 1 zeigt eine Brutwabenheizvorrichtung mit Heizelementen und Figur 2 eine Brutwabenheizvorrichtung mit mehreren Heizelementen und Brutwaben. Die Brutwabenheizvorrichtung 1 ist als Bestandteil eines Bienenstocks ausgestaltet und kann dort als Brutraum fungieren. In die Brutwabenheizvorrichtung 1 ist mindestens ein Heizelement 4 integriert. Das Heizelement 4 ist als Infrarotheizung ausgestaltet und weist eine erste wärmeabgebende Seitenflache 6a und eine zweite wärmeabgebende Seitenfläche 6b auf. Das Heizelement 4 ist in einem Gehäuse 3 in eine Aufnahme (nicht dargestellt) eingebracht, beispielsweise eingehängt. Eine Brutwabe 2 kann ebenfalls in die selbige Aufnahme eingebracht werden, wobei Heizelement 4 und Brutwabe 2 relativ zueinander in der Aufnahme verschiebbar sind. Das Heizelement 4 ist derart in dem Gehäuse 3 eingebracht, dass die wärmeabgebende Seitenfläche 6a parallel zu der Brutwabe 2 angeordnet ist, wobei die Steuereinheit 5 das Heizelement 4 derart steuert und/oder regelt, dass in dem Gehäuse 3 eine vorgegebene Temperatur vorliegt. Das Heizelement 4 weist eine erste 6a und eine zweite 6b wärmeabgebende Seitenfläche auf, wobei die erste wärmeabgebende Seitenflache 6a parallel zu der ersten Brutwabe 2 und die zweite wärmeabgebende Seitenfläche 6b parallel zu einer zweiten oder weiteren Brutwabe 7 angeordnet ist. Hierdurch wird eine beidseitige Erwärmung der Brutwaben 2, 7 erreicht, wobei es sich bei der beheizten oder der der wärmeabgebenden Seitenflache 6a, 6b des Heizelements 4 gegenüberliegenden Seite um die mit Brutzellen 9 besetzte Seite der Brutwabe 2, 7 handelt. Die Heizelemente 4 sind mit der Steuereinheit 5 verbunden, die vorzugsweise eine Leistung von 240 Watt bereitstellt. Es können auch mehrere Steuereinheiten 5 für die Brutwabenheizvorrichtung 1 verwendet werden.

In dem Gehäuse 3, an oder in den Brutzellen 9 und/oder den Heizelementen 4 liegen Temperatursensoren 10 vor, die wiederum mit der Steuereinheit 5 verbunden sind und so eine steuerbare Erwärmung des Gehäuseraums, beziehungsweise der Brutwaben 2 und der Brutwabenzellen 9 erreichen.

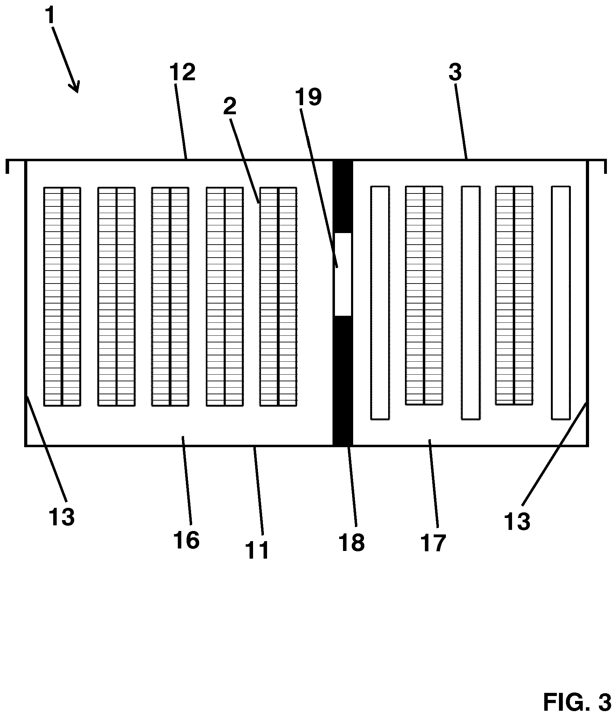

Figur 3 zeigt eine Ausgestaltung mit einer Bienenbeute mit in einem Bereich vorliegenden Heizelementen. Das Gehäuse 3 weist einen Boden 11, eine Abdeckung 12 und Seitenwände 13 auf, wobei mindestens ein weiteres Heizelement 4 im Boden 11, der Abdeckung 12 oder Wänden 13 des Gehäuses 3 vorliegen kann. Die Brutwabenheizvorrichtung 1 ist als separate Einheit oder als Bestandteil eines Bienenstocks, beispielsweise als Bienenbeute ausgestaltet, wobei die separate Einheit mit einem Bienenstock verbindbar, öffenbar und verschließbar ist. So können beispielsweise Brutwaben 2 aus einem Bienenstock in die Brutwabenheizvorrichtung 1 eingebracht werden und dort einer Temperaturbehandlung unterworfen werden. Nach der Temperaturbehandlung werden die Brutwaben 2 wieder in den ursprünglichen Bienenstock eingebracht.

Die Brutwabenheizvorrichtung 1 kann als Bienenbeute ausgestaltet sein, bei der in einem ersten Bereich 16 das Bienenvolk mit Brutwaben 2 vorliegt und in einem zweiten Bereich 17, der von dem ersten Bereich 16 durch eine bienendichte Trennwand 18 getrennt ist, Heizelemente 4 und die zu behandelnden Brutwaben 2, 7 vorliegen. Die Brutwaben 2, 7, die in der Regel die mit Milben befallene Brut beherbergen, können aus dem ersten Bereich 16 in den zweiten Bereich 17 bewegt werden, sofern es einer thermischen Behandlung bedarf. In die Trennwand 18 ist eine Öffnung 19 integriert, die mit einem Verschlussmittel verschließbar ist. Der Verschluss und das Öffnen der Öffnung 19 können automatisch oder manuell erfolgen.

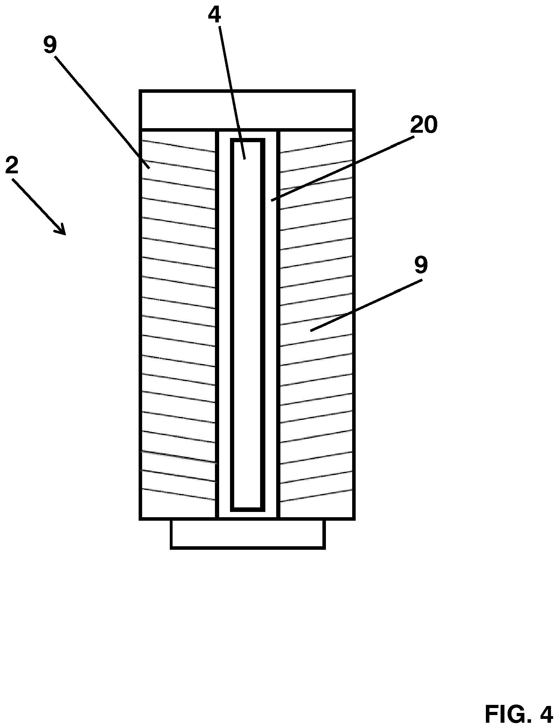

Figur 4 zeigt ein in einer Brutwabe integriertes Heizelement. Das Heizelement 4 kann ebenfalls in einer Brutwabe 2 integriert werden. Brutwaben 2 werden, wie dem Fachmann bekannt ist, vorzugsweise mittels einer entsprechenden Vorrichtung gegossen, wobei in der Mitte der Brutwabe 2 eine Trennwand oder Mittelwand vorliegt. Die Mittelwand wird im Sinne der Erfindung auch als mittlere Längsebene der Brutwabe 2 bezeichnet. Das Heizelement 4 ist in der Regel im Wesentlichen parallel und beabstandet zu in der Brutwabe 2 vorliegende Brutzellen 9 angeordnet. Diese Mittelwand kann um ein Heizelement 4 ergänzt werden, wobei sich an einer mit dem Heizelement 4 verbundene Wachsschicht 20 die Brutzellen 9 anschließen. Das Heizelement 4 bewirkt eine gleichmäßige beidseitige oder einseitige Erwärmung der Brutzellen 9 auf beiden Seiten der Brutwabe 2.

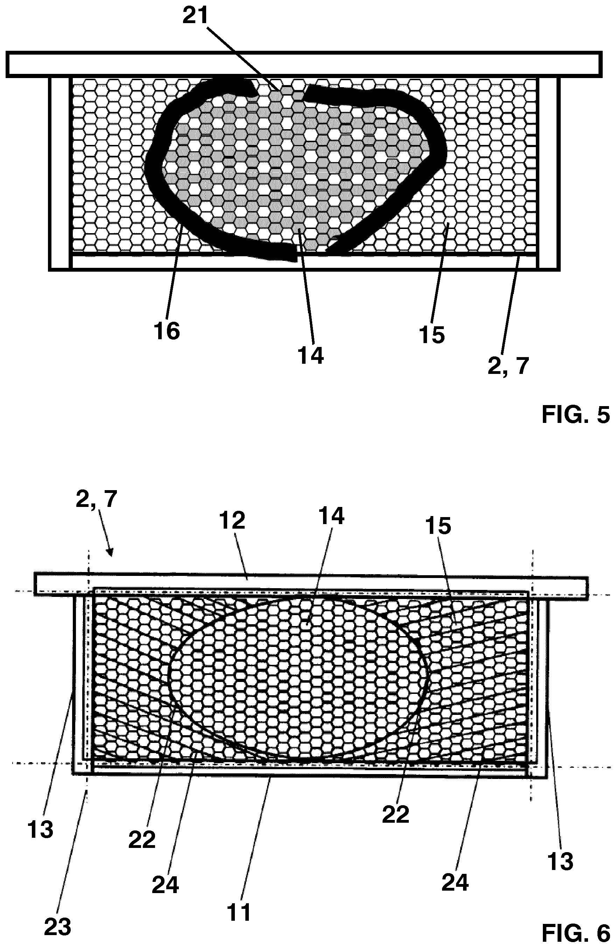

Figur 5 zeigt eine Brutwabenheizvorrichtung mit Abstandsmittel. Versuche haben gezeigt, dass adulte Bienen durch eine Flügelbewegung die beheizten Brutwaben 2, 7 kühlen können, so dass die für die Milben kritische Temperatur nicht erreicht wird und die thermische Behandlung nicht effizient ist. Eine Brutwabe 2, 7 weist gedeckelte 14 und ungedeckelte 15 Bereiche auf. Da die Bienenbrut und folglich die Milben in den gedeckelten 14 Bereichen vorliegen, ist eine Erwärmung dieser Bereiche besonders vorteilhaft. Um eine Störung der Behandlung durch adulte Bienen zu reduzieren, ist um die gedeckelten 14 Bereiche ein umlaufendes Abstandsmittel 16 zwischen einer wärmeabgebenden Seitenfläche eines Heizelementes und der Brutwabe 2, 7 angeordnet. Das Abstandsmittel 16 weist Öffnungen oder Durchgänge 21 auf, durch die adulte Bienen in den durch das Abstandsmittel 16 umschlossenen Bereich eindringen können, um so Zugang zu den Brutzellen zu erhalten und die Bienenbrut zu pflegen und zu füttern.

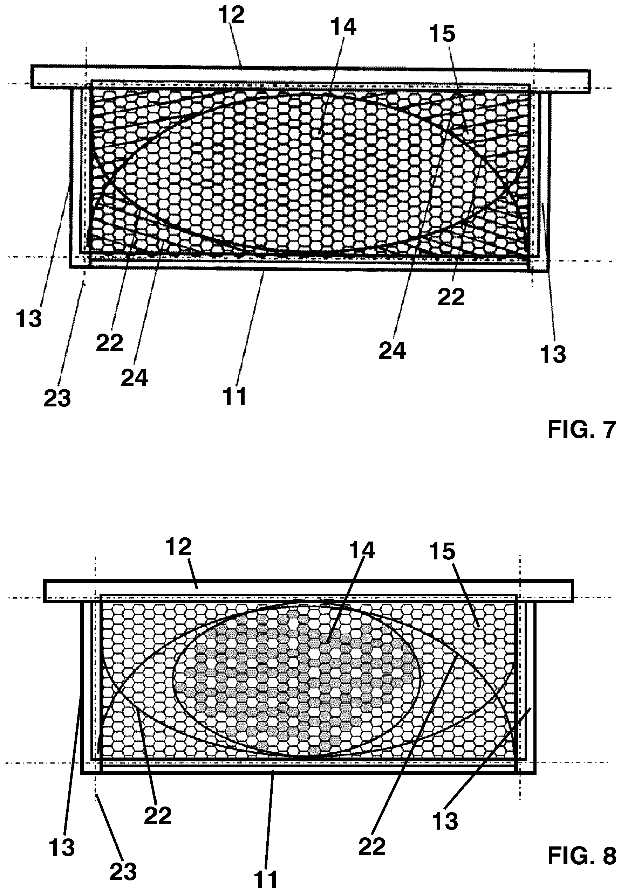

Die Figur 6 bis Figur 8 zeigen Ausgestaltungen eines Abdeckmittels zur Abdeckung der nicht gedeckelten Brutzellen in einer Brutwabe. Um zu erreichen, dass im Wesentlichen nur die gedeckelten Brutzellen von dem Heizelement erwärmt werden, ist ein Abdeckmittel 22 vorgesehen, dass die nicht zu erwärmenden Brutzellen, beispielsweise die nicht gedeckelten Brutzellen, abdeckt. Eine Brutwabe 2, 7 besitzt gedeckelte 14 und ungedeckelte 15 Bereiche. Das Abdeckmittel 22 ist in Form von Rollos ausgestaltet, die beispielswiese in der Abdeckung 22, den Wanden 13 und/oder dem Boden 11 angeordnet sind. Das Abdeckmittel 22 ist eine isolierende Abdeckung aus Metall, Kunststoff oder Naturfasern in Form eines Vorhanges oder eines Rollos zum Abschirmen der erhöhten Wärme zu der noch offenen (ungedeckelten) Brut 15 hin und wird vor der Brutwabe 2, 7, das heißt vor den ungedeckelten Brutzellen 15 angeordnet. Vorteilhafterweise ist die Abdeckung 22 reversibel anbringbar und kann mit jeweils halbmondförmigem Ausschnitt, auf die Größe des zu schützenden oder zu erwärmenden Bereichs 14 eingestellt werden, so dass nur die gedeckelten Brutzellen 14 direkt - ohne isolierende Abdeckung - von dem Heizelement erwärmt werden. Das Abdeckmittel 22 ist in der Abdeckung 12, den Wänden 13 und dem Boden 11 angeordnet, wobei das Abdeckmittel 22 von einer Längsachse 23 ausgehend in Richtung der Brutzellen 14, 15 verstellt werden kann. Zur Verschiebung des Abdeckmittels 22 können beispielsweise Schienen oder Schnüre oder sonstige Mittel verwendet werden. Das Abdeckmittel 22 kann wie in Figur 6 gezeigt beispielsweise von den Wänden 13 ausgehend verstellt werden, so dass ein mittlerer Bereich mit gedeckelten Zellen 14 von dem Heizelement erwärmt wird. Die Bereiche der Brutwabe 2, 7, die die nicht gedeckelten Zellen beherbergen, sind von dem isolierenden Abdeckmittel 22 bedeckt (angedeutet durch die Schraffur 24). Das heißt, der schematische schraffierte Bereich 24 wird nicht von dem Heizelement direkt erwärmt. Figur 7 zeigt ein Verstellen der Abdeckmittel 22, die in der Abdeckung 12 und dem Boden 11 angeordnet sind, um so einen mittleren Bereich mit gedeckelten Zellen 14 zu umgrenzen und die nicht gedeckelten Zellen 15 vor direkter Erwärmung durch das Heizelement zu schützen. Selbstverständlich können auch Abdeckmittel 22 in den Wänden 13, dem Boden 11 und der Abdeckung 12 integriert sein und gleichzeitig verstellt werden. Um die Verstellung der Abdeckmittel erkennbar zu zeigen, wurde in der Figur 8 auf die Schraffur verzichtet. Es ist deutlich, dass lediglich der mittlere Bereich mit den gedeckelten Zellen 14 direkt von dem Heizelement erwärmt wird und der übrige Bereich der Brutwabe 2, 7 mit den ungedeckelten Brutzellen 15 durch das Abdeckmittel 22 bedeckt wird.

## Patentansprüche

1. Brutwabenheizvorrichtung (1) zur thermischen Behandlung von Brutwaben (2) mit einem Gehäuse (3) mit Aufnahmen für mindestens ein flächig ausgebildetes Heizelement (4) und für mindestens eine Brutwabe (2) und mit einer mit dem Heizelement (4) verbundenen Steuereinheit (5), **dadurch gekennzeichnet, dass** das Gehäuse (3) als Teil einer Bienenbeute ausgestaltet ist und zwei von einer Trennwand (18) getrennte Bereiche (16, 17) aufweist, die durch eine in der Trennwand (18) vorliegenden verschließ- und öffenbare Öffnung (19) verbunden sind, das Heizelement (4) als Infrarotheizung ausgestaltet ist und mindestens eine wärmeabgebende Seitenfläche (6a) aufweist und derart in einem zweiten Bereich (17) des Gehäuse (3) eingebracht vorliegt, dass die wärmeabgebende Seitenflache (6a) parallel zu einer von einem ersten in den zweiten Bereich (16, 17) bewegten Brutwabe (2) angeordnet ist, wobei die Steuereinheit (5) das Heizelement (4) derart steuert und/oder regelt, dass in dem Gehäuse (3) eine vorgegebene Temperatur vorliegt,

2. Brutwabenheizvorrichtung (1) nach Anspruch 1, **dadurch gekennzeichnet, dass** das Heizelement (4) eine zweite (6b) wärmeabgebende Seitenfläche aufweist, wobei die erste wärmeabgebende Seitenflache (6a) parallel zu der ersten Brutwabe (2) und die zweite wärmeabgebende Seitenfläche (6b) parallel zu einer weiteren Brutwabe (7) angeordnet ist.

3. Brutwabenheizvorrichtung (1) nach Anspruch 1 oder 2, **dadurch gekennzeichnet, dass** das Heizelement (4) parallel zu einer mittleren Längsebene (8) der Brutwabe (2, 7) und beabstandet zu in der Brutwabe (2, 7) vorliegenden Brutzellen (9) angeordnet ist.

4. Brutwabenheizvorrichtung (1) nach einem der voranstehenden Ansprüche, **dadurch gekennzeichnet, dass** in der Brutwabenheizvorrichtung (1) mit der Steuereinheit (5) verbundene Temperaturmesselemente (10) angeordnet sind.

5. Brutwabenheizvorrichtung (1) nach einem der voranstehenden Ansprüche, **dadurch gekennzeichnet, dass** das Heizelement (4) mit einer Kunststoff-, Keramik- oder Metallschicht ummantelt ist.

6. Brutwabenheizvorrichtung (1) nach einem der voranstehenden Ansprüche, **dadurch gekennzeichnet, dass** die Brutwabenheizvorrichtung (1) einen Luftbefeuchter umfasst.

7. Brutwabenheizvorrichtung (1) nach einem der voranstehenden Ansprüche, **dadurch gekennzeichnet, dass** das Gehäuse (3) einen Boden (11), eine Abdeckung (12) und Seitenwände (13) aufweist und mindestens ein weiteres Heizelement (4) im Boden (11), der Abdeckung (12) oder Wänden (13) des Gehäuses (3) vorliegt.

8. Brutwabenheizvorrichtung (1) nach einem der voranstehenden Ansprüche, **dadurch gekennzeichnet, dass** an dem Gehäuse (3) eine Solarthermievorrichtung und/oder Photovoltaikanlage angeordnet ist.

9. Brutwabenheizvorrichtung (1) nach Anspruch 8, **dadurch gekennzeichnet, dass** die Solarthermievorrichtung mit dem Heizelement (4) verbunden ist und eine von der Solarthermievorrichtung umgewandelte thermische Energie zur Beheizung des Heizelementes (4) dient.

10. Brutwabenheizvorrichtung (1) nach Anspruch 8, **dadurch gekennzeichnet, dass** die Steuereinheit (5) und/oder das Heizelement (4) mit der Photovoltaikanlage verbunden ist.

11. Brutwabenheizvorrichtung (1) nach einem der voranstehenden Ansprüche, **dadurch gekennzeichnet, dass** in dem Boden (11), der Abdeckung (12) oder einer Seitenwand (13) eine verschließbare Öffnung vorliegt, durch die Bienen hindurchtreten können.

12. Brutwabenheizvorrichtung (1) nach einem der voranstehenden Ansprüche, **dadurch gekennzeichnet, dass** die Aufnahmen zur Aufnahme der Heizelemente (4) und der Brutwaben (2, 7) schienenförmig ausgebildet sind.

13. Brutwabenheizvorrichtung (1) nach einem der voranstehenden Ansprüche, **dadurch gekennzeichnet, dass** die Brutwabe (2, 7) gedeckelt (14) und ungedeckelte (15) Bereiche aufweist und um die gedeckelten (14) Bereiche ein umlaufendes Abstandsmittel (16) zwischen einer wärmeabgebenden Seitenflache (6a, 6b) eines Heizelementes (4) und der Brutwabe (2, 1) angeordnet ist.

14. Verfahren zur thermischen Behandlung von Brutwaben, wobei in einem Vorbereitungsschritt ein erstes flächig ausgebildetes Heizelement (4) mit einer ersten und einer zweiten wärmeabgebenden Seitenfläche (6a, 6b) in eine Aufnahme eingebracht wird, die in einem zweiten Bereich (17) in einem als Teil einer Bienenbeute ausgestalteten Gehäuse (3) vorliegt, wobei in einem Einbringungsschritt eine erste Brutwabe (2) zur thermischen Behandlung aus einem in dem Gehäuse (3) vorliegenden ersten Bereich (16) in den zweiten Bereich (17) bewegt und parallel zu der ersten wärmeabgebenden Seitenflache (6a) des Heizelementes (4) angeordnet wird und anschließend eine zweite Brutwabe (7) parallel zu der zweiten wärmeabgebenden Seitenflache (6b) des Heizelementes (4) in die Aufnahme eingeführt wird, wobei zwischen den Bereichen (16, 17) eine bienendichte Trennwand (18) mit einer verschließ- und öffenbaren Öffnung (19) vorliegt, die geschlossen wird, wobei in einem nachfolgenden Heizschritt das Heizelement (4) derart von einer mit dem Heizelement (4) verbundenen Steuereinheit (5) gesteuert und/oder geregelt wird, dass in dem Gehäuse (3) eine vorgegebene Temperatur erreicht wird.

## Claims

1. Brood comb heating device (1) for the thermal treatment of brood combs (2), comprising a housing (3) that has receiving portions for at least one planar heating element (4) and for at least one brood comb (2) and comprising a control unit (5) connected to the heating element (4), **characterised in that** the housing (3) is designed as part of a beehive and has two regions (16, 17) which are divided by a dividing wall (18) and connected by an openable and closable opening (19) in the dividing wall (18), the heating element (4) is designed as an infrared heater, has at least one heat-emitting lateral face (6a) and is inserted in a second region (17) of the housing (3) such that the heat-emitting lateral face (6a) is arranged in parallel with a brood comb (2) moved from a first into the second region (16, 17), the control unit (5) controlling and/or regulating the heating element (4) such that a predetermined temperature is present in the housing (3).

2. Brood comb heating device (1) according to claim 1, **characterised in that** the heating element (4) has a second heat-emitting lateral face (6b), the first heat-emitting lateral face (6a) being arranged in parallel with the first brood comb (2) and the second heat-emitting lateral face (6b) being arranged in parallel with a further brood comb (7).

3. Brood comb heating device (1) according to either claim 1 or claim 2, **characterised in that** the heating element (4) is arranged in parallel with a central longitudinal plane (8) of the brood comb (2, 7) and spaced apart from brood cells (9) present in the brood comb (2, 7).

4. Brood comb heating device (1) according to any of the preceding claims, **characterised in that** temperature measuring elements (10) connected to the control unit (5) are arranged in the brood comb heating device (1).

5. Brood comb heating device (1) according to any of the preceding claims, **characterised in that** the heating element (4) is encased by a plastics, ceramic or metal layer.

6. Brood comb heating device (1) according to any of the preceding claims, **characterised in that** the brood comb heating device (1) comprises an air humidifier.

7. Brood comb heating device (1) according to any of the preceding claims, **characterised in that** the housing (3) has a base (11), a cover (12) and lateral walls (13) and at least one further heating element (4) is present in the base (11), the cover (12) or walls (13) of the housing (3).

8. Brood comb heating device (1) according to any of the preceding claims, **characterised in that** a solar thermal energy device and/or photovoltaic installation is arranged on the housing (3).

9. Brood comb heating device (1) according to claim 8, **characterised in that** the solar thermal energy device is connected to the heating element (4) and thermal energy converted by the solar thermal energy device is used to heat the heating element (4).

10. Brood comb heating device (1) according to claim 8, **characterised in that** the control unit (5) and/or the heating element (4) is connected to the photovoltaic installation.

11. Brood comb heating device (1) according to any of the preceding claims, **characterised in that** a closable opening is present in the base (11), the cover (12) or a lateral wall (13), through which opening bees can pass.

12. Brood comb heating device (1) according to any of the preceding claims, **characterised in that** the receiving portions for receiving the heating elements (4) and the brood combs (2, 7) are rail-shaped.

13. Brood comb heating device (1) according to any of the preceding claims, **characterised in that** the brood comb (2, 7) has covered regions (14) and uncovered regions (15) and a circumferential spacing means (16) is arranged around the covered regions (14) between a heat-emitting lateral face (6a, 6b) of a heating element (4) and the brood comb (2, 1).

14. Method for the thermal treatment of brood combs, wherein in a preparatory step a first planar heating element (4) having a first and a second heat-emitting lateral face (6a, 6b) is inserted into a receiving portion which is present in a second region (17) in a housing (3) designed as part of a beehive, wherein in an insertion step a first brood comb (2) intended for thermal treatment is moved out of a first region (16) present in the housing (3) into the second region (17) and is arranged in parallel with the first heat-emitting lateral face (6a) of the heating element (4) and subsequently a second brood comb (7) is introduced into the receiving portion in parallel with the second heat-emitting lateral face (6b) of the heating element (4), wherein a bee-proof dividing wall (18) having an openable and closable opening (19) that is closed is present between the regions (16, 17), wherein in a subsequent heating step the heating element (4) is controlled and/or regulated by a control unit (5) connected to the heating element (4) such that a predetermined temperature is reached in the housing (3).

## Revendications

1. Dispositif de chauffage de rayons de couvain (1) pour le traitement thermique de rayons de couvain (2), comprenant un boîtier (3) avec des logements pour au moins un élément chauffant (4) de forme plate et pour au moins un rayon de couvain (2), et une unité de commande (5) reliée à l'élément chauffant (4), **caractérisé en ce que** le boîtier (3) est conçu comme une partie d'une ruche à miel et présente deux zones (16, 17) séparées par une cloison de séparation (18) et qui sont reliées par une ouverture (19) pouvant être fermée et ouverte présente dans la cloison de séparation (18), l'élément chauffant (4) étant conçu comme un chauffage infrarouge et présentant au moins une face latérale (6a) émettant de la chaleur et étant intégré dans une deuxième zone (17) du boîtier (3) de telle sorte que la face latérale (6a) émettant de la chaleur est disposée parallèlement à un rayon de couvain (2) déplacé d'une première zone vers la deuxième zone (16, 17), l'unité de commande (5) commandant et/ou régulant l'élément chauffant (4) de telle sorte qu'il règne dans le boîtier (3) une température prédéterminée.

2. Dispositif de chauffage de rayons de couvain (1) selon la revendication 1, **caractérisé en ce que** l'élément chauffant (4) présente une deuxième face latérale (6b) émettant de la chaleur, la première face latérale (6a) émettant de la chaleur étant disposée parallèlement au premier rayon de couvain (2) et la deuxième face latérale (6b) émettant de la chaleur étant disposée parallèlement à un autre rayon de couvain (7).

3. Dispositif de chauffage de rayons de couvain (1) selon la revendication 1 ou 2, **caractérisé en ce que** l'élément chauffant (4) est disposé parallèlement à un plan longitudinal médian (8) du rayon de couvain (2, 7) et à distance des cellules de couvain (9) présentes dans le rayon de couvain (2, 7).

4. Dispositif de chauffage de rayons de couvain (1) selon l'une des revendications précédentes, **caractérisé en ce que** des éléments de mesure de la température (10) reliés à l'unité de commande (5) sont disposés dans le dispositif de chauffage de rayons de couvain (1).

5. Dispositif de chauffage de rayons de couvain (1) selon l'une des revendications précédentes, **caractérisé en ce que** l'élément chauffant (4) est revêtu d'une couche en plastique, en céramique ou en métal.

6. Dispositif de chauffage de rayons de couvain (1) selon l'une des revendications précédentes, **caractérisé en ce que** le dispositif de chauffage de rayons de couvain (1) comprend un humidificateur d'air.

7. Dispositif de chauffage de rayons de couvain (1) selon l'une des revendications précédentes, **caractérisé en ce que** le boîtier (3) présente un fond (11), un couvercle (12) et des parois latérales (13), et au moins un autre élément chauffant (4) est présent dans le fond (11), le couvercle (12) ou les parois (13) du boîtier (3).

8. Dispositif de chauffage de rayons de couvain (1) selon l'une des revendications précédentes, **caractérisé en ce qu'**un dispositif solaire thermique et/ou une installation photovoltaïque sont disposés sur le boîtier (3).

9. Dispositif de chauffage de rayons de couvain (1) selon la revendication 8, **caractérisé en ce que** le dispositif solaire thermique est relié à l'élément chauffant (4) et une énergie thermique convertie par le dispositif solaire thermique sert au chauffage de l'élément chauffant (4).

10. Dispositif de chauffage de rayons de couvain (1) selon la revendication 8, **caractérisé en ce que** l'unité de commande (5) et/ou l'élément chauffant (4) sont reliés à l'installation photovoltaïque.

11. Dispositif de chauffage de rayons de couvain (1) selon l'une des revendications précédentes, **caractérisé en ce qu'**une ouverture pouvant être fermée est présente dans le fond (11), le couvercle (12) ou une paroi latérale (13), ouverture par laquelle les abeilles peuvent passer.

12. Dispositif de chauffage de rayons de couvain (1) selon l'une des revendications précédentes, **caractérisé en ce que** les logements destinés à recevoir les éléments chauffants (4) et les rayons de couvain (2, 7) sont conçus en forme de rail.

13. Dispositif de chauffage de rayons de couvain (1) selon l'une des revendications précédentes, **caractérisé en ce que** le rayon de couvain (2, 7) comporte des zones operculées (14) et non operculées (15), et un moyen d'espacement (16) périphérique est disposé autour des zones operculées (14) entre une face latérale (6a, 6b) émettant de la chaleur d'un élément chauffant (4) et le rayon de couvain (2, 1).

14. Procédé pour le traitement thermique de rayons de couvain, dans lequel, dans une étape de préparation, un premier élément chauffant (4) de forme plate présentant une première et une deuxième faces latérales (6a, 6b) émettant de la chaleur est intégré dans un logement présent dans une deuxième zone (17) dans un boîtier (3) conçu comme une partie d'une ruche à miel, dans lequel procédé, dans une étape d'introduction, un premier rayon de couvain (2) est déplacé pour un traitement thermique d'une première zone (16), présente dans le boîtier (3), dans la deuxième zone (17) et est disposé parallèlement à la première face latérale (6a) émettant de la chaleur de l'élément chauffant (4), puis un deuxième rayon de couvain (7) est introduit dans le logement parallèlement à la deuxième face latérale (6b) émettant de la chaleur de l'élément chauffant (4), une cloison de séparation (18) étanche aux abeilles, avec une ouverture (19) pouvant être fermée et ouverte, étant présente entre les zones (16, 17), l'ouverture étant fermée, dans lequel procédé, dans une étape suivante de chauffage, l'élément chauffant (4) est commandé et/ou régulé par une unité de commande (5) reliée à l'élément chauffant (4) de telle sorte qu'il règne une température prédéterminée dans le boîtier (3).
